Europäisches Patentamt

(19) European Patent Office

Office européen des brevets

(11) Publication number: **0 072 069**
**B1**

## (12) EUROPEAN PATENT SPECIFICATION

(45) Date of publication of patent specification: **19.06.85**

(21) Application number: **82200958.5**

(22) Date of filing: **27.07.82**

(51) Int. Cl.⁴: **C 03 B 37/025**

(54) **Method of producing preforms for drawing optical fibres and apparatus for the continuous production of optical fibres.**

(30) Priority: **03.08.81 NL 8103648**

(43) Date of publication of application:
**16.02.83 Bulletin 83/07**

(45) Publication of the grant of the patent:
**19.06.85 Bulletin 85/25**

(84) Designated Contracting States:
**DE FR GB**

(56) References cited:
**WO-A-80/01908**
**DE-B-2 444 100**
**FR-A-2 410 291**
**GB-A-2 059 944**
**US-A-3 957 474**

**"Topics in Current Chemistry, Vol. 89, Plasma Chemistry I, "Preparation of Optical Waveguides", D. Kuppers and H. Lydtin, 1980, Springer Verlag, Berlin, Heidelberg, New York**

(73) Proprietor: **N.V. Philips' Gloeilampenfabrieken**
**Groenewoudseweg 1**
**NL-5621 BA Eindhoven (NL)**

(72) Inventor: **Küppers, Dieter**
**c/o INT. OCTROOIBUREAU B.V. Prof. Holstlaan 6**
**NL-5656 AA Eindhoven (NL)**

(74) Representative: **Auwerda, Cornelis Petrus et al**
**INTERNATIONAAL OCTROOIBUREAU B.V. Prof. Holstlaan 6**
**NL-5656 AA Eindhoven (NL)**

Courier Press, Leamington Spa, England.

## Description

The invention relates to a method for the continuous production of an optical fibre preform by depositing core and cladding glasses from the vapour phase so as to form a rod-shaped preform extending from a starting member and moving the starting member from the deposition zone at the same speed as the length of the preform increases.

The invention also relates to an apparatus for the continuous production of optical fibres from a preform, which apparatus comprises:

a) a reaction chamber;

b) means for moving the preform at a controlled rate from the reaction chamber;

c) means for maintaining reduced pressure in the reaction chamber;

d) a drawing oven surrounding the preform;

e) a drawing device for drawing the preform into a fibre.

In the field of optical telecommunications there is an increasing demand for large-size preforms for drawing optical fibres.

A method for producing preforms is disclosed in United States Patent Specification No. 4,062,665. In the process described in this United States Patent Specification glass particles of core and cladding materials are deposited onto a startimg member. This results in a porous preform which thereafter has to be vitrified by heating. The preform can only be drawn into a fibre after this treatment.

The present invention has for its object to provide a method of producing a large-size solid preform from which without any intermediate treatment a fibre can be drawn. According to the invention, this object is accomplished by means of a method of the above kind which is characterized in that core glass is directly deposited onto the starting member so as to form by means of a non-isothermal plasma-activated C.V.D.-process a solid column of core glass and that a cladding glass is directly deposited onto the core glass column so as to form by means of a C.V.D.-process activated by a non-isothermal plasma a solid cladding extending from the starting member, wherein the places where deposition takes place are maintained at a temperature of from 1000 to 1200°C and at a reduced pressure. A non-isothermal plasma-activated C.V.D.-process is to be understood to mean a deposition process in which a plasma which is commonly referred to as a cold plasma is used for activating the deposition. In such a plasma only electrons have a high kinetic energy. With such a plasma it is even possible to bring gas mixtures to reaction which cannot be activated thermally. It has further been found that when a non-isothermal plasma-activated C.V.D. process is used glass layers are deposited directly from the gas phase at a comparatively low temperature. Subsequent heating with the object of vitrifying the deposited material, as is necessary in prior art processes (flame hydrolysis, V.A.D.) in which glass soot is deposited, may be dispensed with in the process used according to the invention. This may mean a saving in time and energy compared with prior art processes.

With the method according to the invention it is possible to produce preforms suitable for drawing optical fibres of the so-called stepped-index type as well as preforms suitable for drawing optical fibres of the so-called graded-index type. In the first case core glass of a constant composition is deposited with a refractive index which is greater than the refractive index of the cladding glass. In the second case the composition of the core glass is varied such that the refractive index of the core glass increases towards the axis of the core glass column formed.

The method can easily be modified in such a manner that a preform is produced which grows continuously at one end and which is drawn into an optical fibre at the other end.

In the method according to the invention the customary starting materials may be used and preforms of a conventional composition can be produced. The starting materials are oxygen and silicon tetrachloride to which a constant or a varying quantity of $GeCl_4$, $POCl_3$, or $BCl_3$, $SiF_4$ may be added to increase or decrease respectively the refractive index. Also combinations of these materials and possibly other materials which are commonly referred to as dopants are possible.

In the description of the V.A.D. technique (see the above-mentioned US—A—4,062,665) it is stated that plasma torches may alternatively be used to produce the glass particles; these plasmas are of an isothermal character. In such torches the plasma is produced by mixing intensely heated argon with the reaction gases. This process also has the disadvantage that the preform must be sintered before it can be drawn into an optical fibre.

A further disadvantage of the prior art VAD technique is that when this process is used, it must be ensured that the coefficient of thermal expansion of the core glass is equal to the coefficient of thermal expansion of the cladding glass as otherwise cracks occur during sintering. In accordance with the said US—A—4,062,665 this is accomplished in that the core glass is doped with $GeO_2$ and the cladding glass with $B_2O_3$. The difficulties encountered with graded index fibres cannot be solved in this manner unless a transition zone doped with both $GeO_2$ and $B_2O_3$ is used. In the method in accordance with the invention this measure is not required. Neither during the manufacture of the preform, nor during drawing into optical fibres do cracks occur in the preforms when, for example, the cladding glass consists of pure $SiO_2$ and the core glass of a mixture of $SiO_2$ and $GeO_2$.

The German Publication No. DE—B—2444100 describes a C.V.D.-process which is activated by a non-isothermal plasma, but this publication only teaches the deposition of glass material on the inside walls of a tube in which the C.V.D.-process is performed.

A publication by D. Kuppers and H. Lydtin in Topics in Current Chemistry, Volume 89, Plasma Chemistry I, Preparation of Optical Waveguides, 1980, Springer-Verlag (Berlin, Heidelberg, New York), pages 108—131 discloses the static deposition of silica on the walls of a tube, eventually leading to closing of the tube.

An apparatus for the continuous production of optical fibres from a preform is disclosed in the British Patent Application No. GB—A—2059944. This apparatus comprises a synthesizing torch for the deposition of glass particles on a starting rod by the V.A.D.-technique. The apparatus further comprises at least one exhaust port.

According to the invention there also is provided an apparatus of the kind specified in the second paragraph of page 2, which is characterized in that a microwave cavity is provided surrounding the reaction chamber for generating a non-isothermal plasma in the reaction chamber and that gas inlet pipes are provided for feeding the starting materials in the vapour phase.

A number of embodiments of the invention will now be explained in greater detail by way of example with reference to the accompanying drawing. In this drawing:

Figure 1 shows schematically an embodiment of an apparatus for producing a preform for an optical fibre of the stepped index type.

Figure 2 shows schematically an embodiment of an apparatus for producing a preform for an optical fibre of the graded index type and

Figure 3 shows schematically an embodiment of an apparatus for producing preforms and drawing optical fibre therefrom continuously and simultaneously.

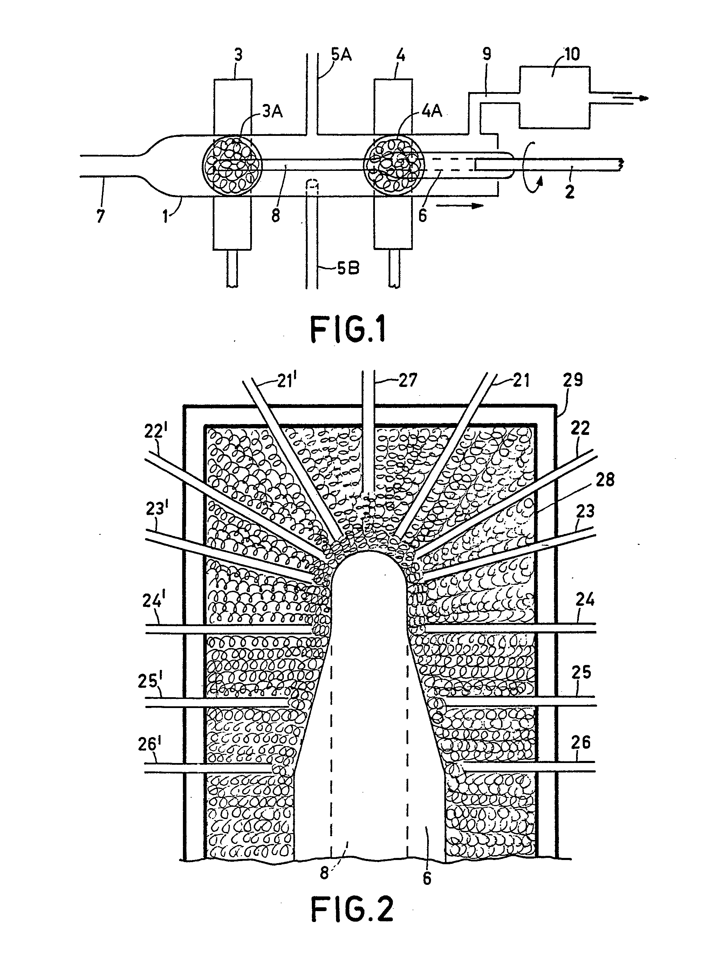

Embodiment 1 (see Figure 1).

A rod-shaped starting member 2 of pure quartz is inserted in a tubular reaction chamber 1 of, for example, quartz to prevent contaminations by metals and to enable visual control of the progress of the deposition process and to enable optical measurements to be made on the preforms being formed. Microwave cavities 3 and 4 which are connected to a microwave generator (not shown) are arranged around the reaction chamber 1. In addition, the tubular reaction chamber 1 has three gas inlet tubes two of which (5A/5B) are shown and whose openings are arranged at 120° intervals with respect to each other around the circumference of the reaction chamber 1. The starting materials for forming the cladding glass 6 are conveyed through these tubes (5A/5B). The tublar reaction chamber 1 further comprises an inlet tube 7 whose axis coincides in the embodiment of Figure 1 with the axis of the reaction chamber 1. The starting materials for the formation of core glass material 8 are fed into the reaction chamber 1 through this tube 7. The other end of the reaction chamber is provided with a gas outlet pipe 9 and a pump 10 for discharging gaseous reaction products $(Cl_2O_2)$.

At the beginning of the process, one end of the starting rod 2 is in that position in the reaction chamber 1 where a plasma is formed by means of the microwave cavity 3. Thereafter a mixture of oxygen and silicon tetrachloride and a dopant, for example $GeCl_4$, is fed into the tube. The plasma 3A is ignited, resulting in a core glass consisting of an intimate mixture of $SiO_2$ and $GeO_2$ being deposited onto the starting rod 2. Rod 2 is moved to the right (see horizontal arrow) at such a speed that, the starting materials being supplied continuously, a column 8 of core glass material is formed. It is advantageous to rotate the starting rod 2 during the deposition process. After column of a predetermined length has been formed, starting materials for the formation of cladding glass material is passed through the inlet tubes (5A/5B), whose openings are located between the microwave cavities 3 and 4 and the plasma inside the microwave cavity 4 is ignited. It is recommendable to have the process proceed in such a manner that also cladding glass material is deposited onto the circumference of rod 2. In this way a firm bond is obtained between the preform (8, 6) being formed and the starting rod 2. This bonding region may at a later stage also serve to clamp the preform during the fibre drawing operation. By means of ovens, not shown, in places where material is being deposited, the temperature is maintained between 1000 and 1200°C, preferably at 1150°C. During the entire deposition process the starting rod 2 and the preform being formed are preferably rotated.

In a practical case the inside diameter of the tubular reaction chamber 1 was 3 cm. The chamber consisted of a quartz tube having a wall thickness of 1 mm. A gas mixture consisting of $O_2$ (200 n $cm^3$/min), $SiCl_4$ (30 n $cm^3$/min) and $GeCl_4$ (3 n $cm^3$/min) was fed through the gas inlet tube 7 into the reaction chamber. The frequency of the electric field in the microwave cavity 3 was 2.45 GHz.

Thereafter a gas mixture consisting of $O_2$ (600 n $cm^3$/min) and $SiCl_4$ (120 n $cm^3$/min) was fed into the reaction chamber through the inlet tubes 5A and 5B. The frequency of the electric field in the microwave cavity 4 was also 2.45 GHz. The deposition process was activated by means of the formed plasmas 3A and 4A. A preform having an overall diameter of 10 mm was formed at a rate of 0.15 cm/min. The diameter of the starting rod 2 was 5 mm. A stepped index fibre having a 50 μm diameter core and an overall diameter of 125 μm and a length of 1 km was drawn from the formed preform (length 20 cm). It is obvious that the reaction chamber 1 may alternatively be arranged vertically. Further, it is possible to use more than two microwave cavities and to have mixtures of starting materials which flow into the reaction chamber 1 in more than two places. In this manner a plurality of layers of core glass of different compositions and refractive indices may be deposited on top of each other, for example for the formation of a preform for drawing an optical fibre of the graded index type.

Embodiment 2 (see Figure 2).

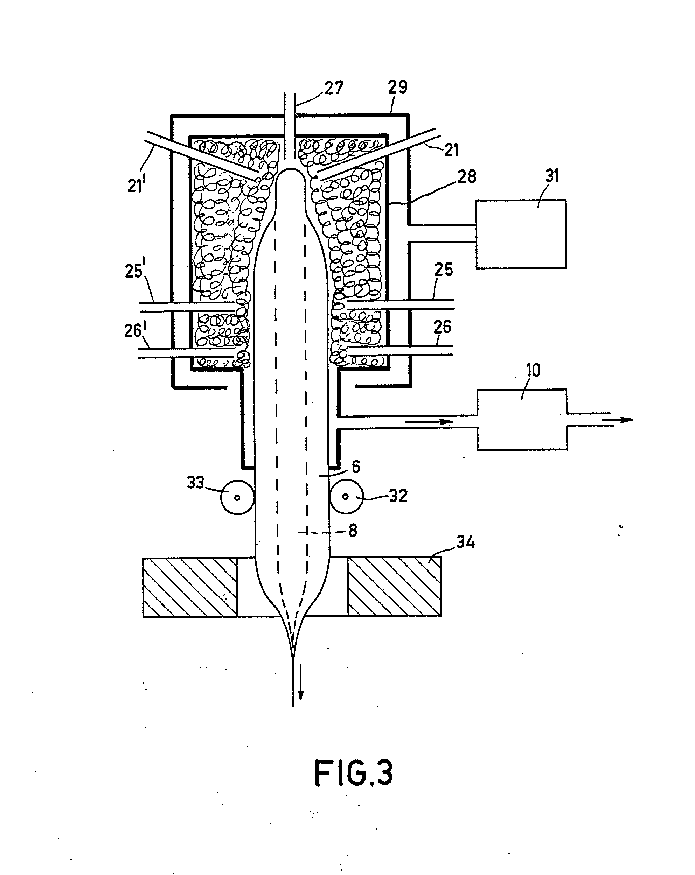

Figure 2 shows schematically an embodiment of a method for the continuous production of a preform for the drawing of optical fibres of the graded-index type. In this method, one plasma is used which is generated by means of the microwave cavity 29. The deposition reaction is performed in a cylindrical, quartz glass reaction chamber 28 having a number of inlet tubes 21 to 27, inclusive and 21' to 26' inclusive, respectively. A mixture of $SiCl_4$ and $GeCl_4$ is passed through the tubes 21 to 24, inclusive (and 21' to 24', inclusive), the $SiCl_4$ to $GeCl_4$ ratio in the mixture increasing from 21 to 24 (and from 21' to 24'). Oxygen is fed through the tube 27, $SiCl_4$ is supplied through the tubes 25 and 26 (and 25' and 26') for forming cladding glass. By carefully harmonizing the composition of the supplied gases, the degree to which the deposited core glass material is doped can be controlled. When more inlet tubes are used and the flow rate of the gas is increased, a higher deposition rate may be used. The temperature at the surface of the preform being formed is maintained at a temperature between 1100 and 1200°C. This prevents chlorine from being built into the deposited glass. The temperature can be adjusted by means of the power which is dissipated in the plasma. In all other respects the process is carried out in the same way as described with reference to embodiment 1; also here the preform 8/6 being formed is rotated during the deposition process. In the apparatus which is schematically shown in Figure 3, corresponding reference numerals have the same meaning as in Figures 1 and 2. In Figure 3 there are further schematically shown a microwave generator 31, supporting wheels 32 and 33 and an oven 34. Figure 3 shows, that at one end a preform for drawing an optical fibre of the stepped index type is being formed while at the other end this preform is drawn into a fibre. For this purpose oxygen (*via* inlet pipe 27) and a mixture of $SiCl_4$ and $GeCl_4$ (*via* the inlet pipes 21 and $21^1$) and $SiCl_4$ (*via* the respective inlet pipes 25 and 26 and $25^1$ and $26^1$) are passed into the reaction chamber 28. A core 8 of $GeO_2$ /$SiO_2$ glass and a cladding 6 of $SiO_2$ is formed. The plasma is generated by means of the microwave cavity 29 which is connected to a schematically shown microwave generator 31. By means of the pump 10 reactive gases are pumped from the reaction chamber 28 and a reduced pressure is maintained in the reaction chamber 28. Using a reduced pressure and guide wheels which can be rotated at an adjustable speed (two of these wheels are shown in the Figure; 32 and 33) it is possible to move the preform at a constant rate from the reaction chamber 28 and to draw simultaneously at the bottom side a fibre for which purpose an oven 33 heats the preform in that region to the drawing temperature (approximately 2000°C), a drawing device (not shown) being present. With an arrangement of this type it is possible to continuously produce high grade optical fibres at a high production rate.

## Claims

1. A method for the continuous production of an optical fibre preform by depositing core and cladding glasses from the vapour phase so as to form a rod-shaped preform extending from a starting member, and moving the starting member from the deposition zone at the same speed as the length of the preform increases, characterized in that core glass is directly deposited onto the starting member so as to form by means of a non-isothermal plasma-activated C.V.D.-process a solid column of core glass and that a cladding glass is directly deposited onto the core glass column so as to form by means of a C.V.D.-process activated by a non-isothermal plasma a solid cladding extending from the starting member, wherein the places where deposition takes place are maintained at a temperature of from 1000 to 1200°C and at a reduced pressure.

2. An apparatus for the continuous production of optical fibres from a preform, which apparatus comprises:
   a) a reaction chamber;
   b) means for moving the preform at a controlled rate from the reaction chamber;
   c) means for maintaining reduced pressure in the reaction chamber;
   d) a drawing oven surrounding the preform;
   e) a drawing device for drawing the preform into a fibre;
characterized in that a microwave cavity is provided surrounding the reaction chamber for generating a non-isothermal plasma in the reaction chamber and that gas inlet pipes are provided for feeding the starting materials in the vapour phase.

## Patentansprüche

1. Verfahren zum kontinuierlichen Herstellung einer Vorform zum Ziehen optischer Fasern durch Ablagerung von Kern- und Mantelgläsern aus der Dampfphase zur Bildung einer sich von einem Ausgangskörper aus erstreckenden, stabförmigen Vorform und durch Herausbewegen des Ausgangskörpers aus der Ablagerungszone mit einer der Zunahme der Vorformlänge entsprechenden Geschwindigkeit, dadurch gekennzeichnet, dass Kernglas zur Bildung eines massiven Kernglaskörpers mit Hilfe eines nicht-isothermen plasma-aktivierten chemischen Aufdampfverfahrens direkt auf dem Ausgangskörper abgelagert wird und dass ein Mantelglas zur Bildung eines sich von dem Ausgangskörper aus erstreckenden massiven Mantels mit Hilfe eines nicht-isothermen plasma-aktivierten chemischen Aufdampfverfahrens direkt auf dem Kerglaskörper abgelagert wird, wobei die Stellen, an denen die Ablagerung stattfindet, auf einer Temperatur von 1000 bis 1200°C und auf einem reduzierten Druck gehalten werden.

2. Vorrichtung zur kontinuierlichen Herstellung von optischen Fasern aus einer Vorform

a) mit einer Reaktionskammer,

b) Mitteln zu Herausbewegen der Vorform aus der Reaktionskammer mit einstellbarer Geschwindigkeit,

c) Mitteln zum Aufrechterhalten eines reduzierten Drucks in der Reaktionskammer,

d) einem die Vorform umgebenden Ziehofen,

e) einer Ziehvorrichtung zum Ausziehen der Vorform zu einer Fasern, dadurch gekennzeichnet, dass ein die Reaktionskammer umgebender Mikrowellen-Hohlraum zum Erzeugen eines nicht-isothermen Plasmas in der Reaktionskammer und Gaseintrittsrohre zur Einspeisung der Ausgangswerkstoffe in die Dampfphase vorgesehen sind.

## Revendications

1. Procédé pour la fabrication en continu d'une préforme de fibre optique par dépôt de verres de noyau et de gaine à partir de la phase de vapeur de façon à former une préforme en forme de barre s'étendant à partir d'un organe de départ et déplacement de l'organe de départ à partir d'une zone de dépôt à la vitesse à laquelle augmente la longueur de la préforme, caractérisé en ce que du verre de noyau est déposé de façon directe sur le corps de départ de façon à former, à l'aide d'un processus D.V.C. activé à l'aide de plasma non isothermique, une colonne solide en verre de noyau et qu'un verre de gaine est déposé de façon directe sur la colonne de verre de noyau de façon à former, à l'aide d'un processus D.V.C. activé à l'aide du plasma non isothermique, une gaine solide s'étendant à partir du corps de départ, dans lequel les places où s'effectue dépôt sont maintenues à une température comprise entre 1000 et 1200°C et sous une pression réduite.

2. Appareil pour la fabrication en continu de fibres optiques à partir d'une préforme, appareil qui comporte:

a) une chambre de réaction;

b) des moyens pour déplacer la préforme à une vitesse réglée à partir de la chambre de réaction;

c) des moyens pour maintenir une pression réduite dans la chambre de réaction;

d) un four d'étirage entourant la préforme;

e) un dispositif d'étirage pour l'étirage de la préforme en une fibre;

caractérisé en ce qu'une cavité micro-onde est appliquée autour de la chambre de réaction pour la formation d'un plasma isothermique dans la chambre de réaction et que des tuyaux d'admission de gaz sont appliqués pour l'amenée de matériaux de départ dans la phase de vapeur.

0 072 069

FIG.1

FIG.2

FIG.3